# EUROPEAN PATENT APPLICATION

(11) **EP 4 840 918 A1**
(43) Date of publication of application: **18.11.2026**
(21) Application number: 25738932.0
(22) Date of filing: 10.01.2025
(51) Int. Cl.: C09D 151/00, C09D 5/02, C09D 127/06, C09D 133/00, C09D 175/04

(54) **COATING COMPOSITION AND LAMINATE**

(30) Priority: 10.01.2024 JP 2024001795
(71) Applicant: Nissin Chemical Industry Co., Ltd., Fukui 915-0802 (JP)
(72) Inventor: YAMAZAKI, Koji, Echizen-shi, Fukui 915-0802 (JP); OKUDA, Harukazu, Echizen-shi, Fukui 915-0802 (JP); MITTA, Yasuhiro, Echizen-shi, Fukui 915-0802 (JP)
(74) Representative: Angerhausen, Christoph
(86) International application number: PCT/JP2025/000684
(87) International publication number: WO 2025/150565

(57) **Abstract**

An emulsion-type coating composition imparts properties of a silicone resin without degrading properties of emulsions of a vinyl chloride resin, an acrylic resin, and a urethane resin and resolves the problem associated with cost. The coating composition includes the components (I) and (II) of: (I) an emulsion of a vinyl chloride resin, an acrylic resin, and/or a urethane resin, and (II) a vinyl chloride-silicone graft copolymer resin emulsion that is a polymer of (A) an organopolysiloxane and (B) vinyl chloride, in which a mass ratio (A):(B) is 5:95 to 95:5.

## Description

### Technical Field

The present invention relates to a coating composition, in particular, to an emulsion-type coating composition that can maintain transparency and can impart slidability when a substrate surface is coated with the coating composition. The present invention also relates to a laminate that includes films formed from this coating composition.

### Background Art

In the field of the coating agents, recent years have seen an increasing transition from organic solvent-based dispersion media to water-based dispersion media due to environmental concerns. Emulsions of, for example, vinyl chloride resins, acrylic resins, and urethane resins have excellent film-forming properties and have been widely used as the coating agents.

Furthermore, silicone resins are known as the resins that can impart slidability to a substrate. However, when silicone resins are used as coating agents, defects such as blushing of coating films have occurred.

Emulsions of copolymers, such as acrylic silicone emulsions and urethane silicone emulsions, are known as the silicone-modified resin emulsions. While these emulsions can impart advantages of silicone, such as weather resistance, heat resistance, cold resistance, water repellency, gas permeability, and slidability, in addition to the properties of the emulsions of acrylic resins or urethane resins, there are also disadvantages such as increased cost associated with the use of copolymers, and degradation of the advantages that the resin has had before modification.

Thus, an attempt has been made to use, as a coating agent, a mixture obtained by mixing an emulsion of a vinyl chloride resin, an acrylic resin, or a urethane resin, having a film-forming property, with a silicone resin. However, mixing has not always brought about satisfactory performance; for example, slidability of the silicone resin could not be achieved, and the properties of the original urethane resin, acrylic resin, and vinyl chloride resin have degraded.

For example, JP-A-2013-067787 (Patent document 1) and JP-A-2020-090596 (Patent document 2) disclose that a coating agent obtained by mixing an emulsion of a vinyl chloride resin, an acrylic resin, or a urethane resin with a silicone resin can impart water repellency and transparency to a substrate. However, there has been room for improvement for silicone resins from the viewpoints of transparency, water repellency, slidability, and cost.

### Prior Art Documents

### Patent documents

Patent document 1: JP-A-2013-067787
Patent document 2: JP-A-2020-090596

### Summary of Invention

### Technical Problem

Thus, an object of the present invention is to provide an emulsion-type coating composition that imparts properties of a silicone resin without degrading properties of emulsions of a vinyl chloride resin, an acrylic resin, and a urethane resin, and that resolves the problem associated with cost, and a laminate that includes coating films formed from the composition.

### Solution to Problem

The inventors of the present invention have conducted extensive studies to achieve the object described above and have thus found that a coating composition in which (I) at least one resin emulsion selected from a vinyl chloride resin emulsion, an acrylic resin emulsion, and a urethane resin emulsion and (II) a vinyl chloride-silicone graft copolymer are blended at a particular ratio can resolve the problem described above, thereby arriving at the present invention.

That is, the present invention provides a coating composition, a coating film thereof, and a laminate as set forth below.

<1> A coating composition comprising the components (I) and (II) of:
   (I) at least one emulsion selected from a vinyl chloride resin emulsion, an acrylic resin emulsion, and a urethane resin emulsion in an amount of 60 to 99% by mass in solid content; and
   (II) a vinyl chloride-silicone graft copolymer resin emulsion in an amount of 1 to 40% by mass in solid content, the vinyl chloride-silicone graft copolymer resin emulsion being a graft copolymer of (A) an organopolysiloxane represented by the following formula (1) and (B) vinyl chloride, wherein a mass ratio of the organopolysiloxane (A) to the vinyl chloride (B) is (A):(B) = 5:95 to 95:5: 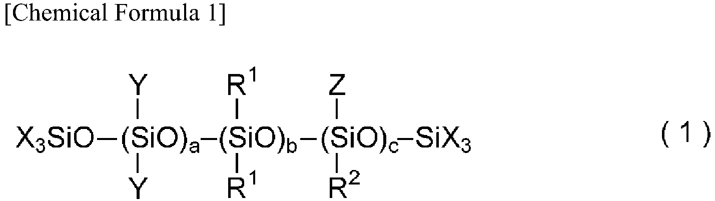 wherein, in the formula (1), each R¹ is the same or a different substituted or unsubstituted monovalent hydrocarbon group having 1 to 20 carbon atoms, R² is a radically reactive functional group, each X is the same or a different substituted or unsubstituted monovalent hydrocarbon group having 1 to 20 carbon atoms or an alkoxy group having 1 to 20 carbon atoms, or a hydroxyl group, each Y is the same or a different group represented by X or -[O-Si(X)₂]_{d}-X, Z is an alkyl group having 1 to 4 carbon atoms, an alkoxy group having 1 to 4 carbon atoms, or a hydroxyl group, a is a number of 0 to 10,000, b is a number of 100 to 10,000, c is a number of 0.0001 to 100, and d is a number of 1 to 1,000.
<2> A cured product of the coating composition according to <1>.
<3> The cured product according to <2>, wherein the cured product is a coating film.
<4> A laminate comprising the cured product according to <2>.
<5> A laminate comprising the cured product according to <3>.

### Advantageous Effects of Invention

The coating composition according to the present invention has excellent transparency, water repellency, and slidability, and enables a laminate, having coating films formed from the coating composition, to maintain high wear resistance without impairing the appearance of the laminate. Furthermore, the dispersion medium of the coating composition according to the present invention is water-based, and thus there are significant advantages from the operational aspect and the environmental aspect.

### Description of Embodiments

For the emulsion (I) selected from a vinyl chloride resin emulsion, an acrylic resin emulsion, and a urethane resin emulsion, one such emulsion may be used alone, or two or more such emulsions may be used in combination. The emulsion of the component (I) used may be the one synthesized by a known method, for example, an emulsion polymerization method using an anionic surfactant or a nonionic surfactant, or a commercially available product may be used. The emulsion has a film-forming property.

The term "film-forming property" refers to a property in which the surface of the coating film after drying loses granular texture at a particular temperature or higher and in which fine cracks do not occur during drying. The drying temperature range for forming the coating film is not particularly limited but is preferably 30 to 150°C and more preferably 100 to 150°C. The drying time is not particularly limited but is preferably about 1 second to 10 hours.

In order for the emulsion of the component (I) selected from a vinyl chloride resin emulsion, an acrylic resin emulsion, and a urethane resin emulsion to have a film-forming property, the average particle size of the emulsion is preferably 10 to 500 nm. The average particle size is measured with a dynamic light scattering particle size distribution analyzer. The emulsion of the component (I) preferably has a viscosity (25°C) of 10 to 500 mPa·s. The viscosity can be measured with a rotational viscometer.

The glass transition temperature (hereinafter may also be referred to as Tg) of the emulsion of the component (I) is 120°C or less, preferably 60°C or less, and more preferably 30°C or less. The lower limit of the glass transition temperature is preferably -50°C. The glass transition temperature can be measured in accordance with JIS K 7121.

### Vinyl chloride resin emulsion

The vinyl chloride resin emulsion of the component (I) is not limited to an emulsion of a homopolymer of a vinyl chloride monomer and may be an emulsion of a copolymer (copolymer resin) of a vinyl chloride monomer and a vinyl acetate monomer, or of a vinyl chloride monomer and an acrylic monomer used in the acrylic resin emulsion described below.

### Acrylic resin emulsion

The acrylic resin emulsion of the component (I) is an emulsion of a copolymer (copolymer resin) obtained by mixing one or more of the monomers described below. Examples of acrylic resin monomers include (meth)acrylic acid esters with alcohols having C1-C18 alkyl groups, 2-hydroxyethyl (meth)acrylate, 2-hydroxypropyl (meth)acrylate, methoxyethyl (meth)acrylate, butoxyethyl (meth)acrylate, glycidyl (meth)acrylate, allyl (meth)acrylate, ethylene glycol di(meth)acrylate, and diethylene glycol di(meth)acrylate. Here, (meth)acrylate is a generic name for acrylates and methacrylates. In addition to the monomers described above, the following monomers may be used in combination. Such monomers include, for example, acrylonitrile, vinyl acetate, vinyl propionate, styrene, acrylic acid, methacrylic acid, (meth)acrylamide, N-methylol(meth)acrylamide, and N-methoxymethyl(meth)acrylamide.

### Urethane resin emulsion

The urethane resin emulsion is not limited to an emulsion of a homopolymer made from molecules having urethane bonds or isocyanurate bonds, and may be an emulsion of a copolymer (copolymer resin) with an acrylic monomer, a silane monomer, an epoxy monomer, a polyester polymer, or a urea polymer.

Specific examples of the emulsion include vinyl chloride resin emulsions that use vinyl chloride, vinyl chloride/vinyl acetate, or vinyl chloride/(meth)acrylic acid or an ester thereof, acrylic resin emulsions that use (meth)acrylic monomers such as (meth)acrylic acid and (meth)acrylic acid esters, and urethane resin emulsions.

Examples of a commercially available vinyl chloride resin emulsion include VINYBLAN available from Nissin Chemical Industry Co., Ltd. Examples of commercially available acrylic resin emulsions include VINYBLAN available from Nissin Chemical Industry Co., Ltd., YODOSOL available from Henkel Japan Co., and ARON available from TOAGOSEI CO., LTD. Examples of commercially available urethane resin emulsions include ADEKA BONTIGHTER HUX series available from ADEKA CORPORATION, WLS series available from DIC Corporation, and UCOAT available from Sanyo Chemical Industries, Ltd.

The blend amount of the emulsion of the component (I) selected from a vinyl chloride resin emulsion, an acrylic resin emulsion, and a urethane resin emulsion is 60 to 99% by mass and preferably 65 to 95% by mass in solid content in the coating composition. When the amount of the emulsion is less than 60% by mass, coating film properties such as wear resistance may be degraded, and when the amount exceeds 99% by mass, the surface is not smooth, and thus the tactile feel may be degraded.

The vinyl chloride-silicone graft copolymer resin emulsion (II) is obtained by graft copolymerization of (A) an organopolysiloxane represented by the following general formula (1) and (B) vinyl chloride, and is a vinyl chloride-silicone graft copolymer resin emulsion in which the mass ratio of the organopolysiloxane (A) to the vinyl chloride (B) is expressed as (A):(B) = 5:95 to 95:5.

The organopolysiloxane (A) of the present invention is represented by the following formula (1): 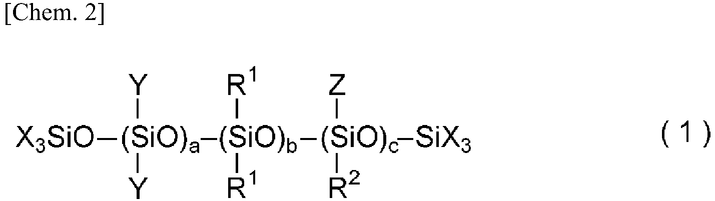 wherein each R¹ is the same or a different substituted or unsubstituted monovalent hydrocarbon group having 1 to 20 carbon atoms, R² is a radically reactive functional group, each X is the same or a different substituted or unsubstituted monovalent hydrocarbon group having 1 to 20 carbon atoms, or an alkoxy group having 1 to 20 carbon atoms, or a hydroxyl group, each Y is the same or a different group represented by X or -[O-Si(X)₂]_{d}-X, Z is an alkyl group having 1 to 4 carbon atoms, an alkoxy group having 1 to 4 carbon atoms, or a hydroxyl group, a is a number of 0 to 10,000, b is a number of 100 to 10,000, c is a number of 0.0001 to 100, and d is a number of 1 to 1,000.

Here, each R¹ is the same or a different substituted or unsubstituted monovalent hydrocarbon group having 1 to 20 carbon atoms, and specific examples thereof include, an alkyl group such as a methyl group, an ethyl group, a propyl group, a butyl group, a pentyl group, a hexyl group, a heptyl group, an octyl group, a nonyl group, a decyl group, a dodecyl group, a tetradecyl group, a hexadecyl group, or an octadecyl group; a cycloalkyl group such as a cyclopentyl group, a cyclohexyl group, or a cycloheptyl group; an alkenyl group such as a vinyl group or an allyl group; an aryl group such as a phenyl group, a tolyl group, or a naphthyl group; an alkenylaryl group such as a vinylphenyl group; an aralkyl group such as a benzyl group, a phenylethyl group, or a phenylpropyl group; an alkenylaralkyl group such as a vinylbenzyl group or a vinylphenylpropyl group; or any of the foregoing groups having some or all of the hydrogen atoms substituted with a halogen atom such as fluorine, bromine, or chlorine, an acryloxy group, a methacryloxy group, a carboxyl group, an alkoxy group, an alkenyloxy group, an amino group, or an alkyl-, alkoxy- or (meth)acryloxy-substituted amino group. Each R¹ is preferably a methyl group.

R² is a radically reactive functional group, and is, for example, an alkyl group, having 1 to 8 carbon atoms, substituted with a mercapto group or an ethylene double bond-containing group, a vinyl group, or a styryl group. Specific examples of the alkyl group, having 1 to 8 carbon atoms, substituted with a mercapto group or an ethylene double bond-containing group include alkyl groups, having 1 to 8 carbon atoms, substituted with a mercapto group, a vinyl group, a styryl group, a mercapto group, an acryloxy group, or a methacryloxy group. Examples of the radically reactive functional group represented by R² include a vinyl group, a styryl group, an octenyl group, a methacryloxyoctyl group, a mercaptopropyl group, an acryloxypropyl group, a methacryloxypropyl group, and a methacryloxyoctyl vinyl group.

Each X is the same or a different substituted or unsubstituted monovalent hydrocarbon group having 1 to 20 carbon atoms or an alkoxy group having 1 to 20 carbon atoms, or a hydroxyl group, examples of the substituted or unsubstituted monovalent hydrocarbon group having 1 to 20 carbon atoms include those same as the examples for R¹, and specific examples of the alkoxy group having 1 to 20 carbon atoms include a methoxy group, an ethoxy group, a propoxy group, a butoxy group, a hexyloxy group, a heptyloxy group, an octyloxy group, a decyloxy group, and a tetradecyloxy group. Among these, a hydroxyl group, a methyl group, a butyl group, and a phenyl group are preferable.

Each Y is the same or a different group represented by X or -[O-Si(X)₂]_{d}-X. Examples of X are the same as those described above.

Z is an alkyl group having 1 to 4 carbon atoms, an alkoxy group having 1 to 4 carbon atoms, or a hydroxyl group and is preferably a hydroxyl group or a methyl group.

a is a number of 0 to 10,000, preferably 0 to 1,000, and more preferably 0 to 200. The lower limit may be set to 0.5 to constitute the unit a. When a is larger than 10,000, the strength of the obtained coating film may be insufficient when a composition containing the component (A) is used to form a coating film.
b is a number of 100 to 10,000 and preferably 1,000 to 5,000. When b is less than 100, the coating may have poor flexibility, and when b is more than 10,000, the tear strength thereof may decrease.
c is a number of 0.0001 to 100, and when c exceeds 100, the sliding effect is not always exhibited.

Here, c/(a + b + c) × 100 is preferably 0.0001 to 10 and more preferably 0.001 to 10.
d is a number of 1 to 1,000 and preferably 1 to 200.

The organopolysiloxane represented by the formula (1) above is preferably used in an emulsion form, and may be a commercially available product or synthesized. When the organopolysiloxane is to be synthesized, a known emulsion polymerization method may be adopted; for example, the organopolysiloxane can be easily synthesized by emulsifying and dispersing, in water, a cyclic organosiloxane or α,ω-dihydroxysiloxane oligomer, α,ω-dialkoxysiloxane oligomer, alkoxysilane, or the like, with a silane coupling agent represented by the following formula (2) by using an anionic surfactant, and then carrying out polymerization reaction by adding a polymerization catalyst such as an acid as necessary. The cyclic organosiloxane may have a fluorine atom, a (meth)acryloxy group, a carboxyl group, a hydroxyl group, or an amino group.
[Chem. 3]

R³_{(4-e-f)}R⁴_{f}Si(OR⁵)ₑ (2)

In the formula (2), R³ is a radically reactive functional group, in particular, an acryloxy group, a methacryloxy group, an alkyl group having 1 to 8 carbon atoms substituted with a vinyl group or a mercapto group, a styryl group, or a vinyl group, R⁴ is an alkyl group having 1 to 4 carbon atoms or a hydroxyl group, R⁵ is an alkyl group having 1 to 4 carbon atoms, e is 2 or 3, f is 0 or 1, and e + f is 2 or 3.

Examples of the cyclic organosiloxane include hexamethylcyclotrisiloxane (D3), octamethylcyclotetrasiloxane (D4), decamethylcyclopentasiloxane (D5), dodecamethylcyclohexasiloxane (D6), 1,1-diethylhexamethylcyclotetrasiloxane, phenylheptamethylcyclotetrasiloxane, 1,1-diphenylhexamethylcyclotetrasiloxane, 1,3,5,7-tetravinyltetramethylcyclotetrasiloxane, 1,3,5,7-tetramethylcyclotetrasiloxane, 1,3,5,7-tetracyclohexyltetramethylcyclotetrasiloxane, tris(3,3,3-trifluoropropyl)trimethylcyclotrisiloxane, 1,3,5,7-tetra(3-methacryloxypropyl)tetramethylcyclotetrasiloxane, 1,3,5,7-tetra(3-acryloxypropyl)tetramethylcyclotetrasiloxane, 1,3,5,7-tetra(3-carboxypropyl)tetramethylcyclotetrasiloxane, 1,3,5,7-tetra(3-vinyloxypropyl)tetramethylcyclotetrasiloxane, 1,3,5,7-tetra(p-vinylphenyl)tetramethylcyclotetrasiloxane, 1,3,5,7-tetra[3-(p-vinylphenyl)propyl]tetramethylcyclotetrasiloxane, 1,3,5,7-tetra(N-acryloyl-N-methyl-3-aminopropyl)tetramethylcyclotetrasiloxane, and 1,3,5,7-tetra(N,N-bis(lauroyl)-3-aminopropyl)tetramethylcyclotetrasiloxane. Preferably, octamethylcyclotetrasiloxane and decamethylcyclopentasiloxane are used.

Specific examples of the silane coupling agent include vinylsilanes such as vinyltrimethoxysilane, vinyltriethoxysilane, vinyltripropoxysilane, vinyltriisopropoxysilane, vinylmethyldimethoxysilane, and vinylmethyldiethoxysilane; acrylic silanes such as γ-(meth)acryloxypropyltrimethoxysilane, γ-(meth)acryloxypropyltriethoxysilane, γ-(meth)acryloxypropyltripropoxysilane, γ-(meth)acryloxypropyltriisopropoxysilane, γ-(meth)acryloxypropyltributoxysilane, γ-(meth)acryloxypropylmethyldimethoxysilane, γ-(meth)acryloxypropylmethyldiethoxysilane, γ-(meth)acryloxypropylmethyldipropoxysilane, γ-(meth)acryloxypropylmethyldiisopropoxysilane, and γ-(meth)acryloxypropylmethyldibutoxysilane; mercaptosilanes such as γ-mercaptopropylmethyldimethoxysilane and γ-mercaptopropyltrimethoxysilane; and styrylsilanes such as styryltrimethoxysilane. An oligomer obtained by condensation polymerization of any of these monomers is sometimes more preferable since generation of alcohols is suppressed. Here, (meth)acryloxy refers to acryloxy or methacryloxy.

These silane coupling agents are preferably used in an amount of 0.01 to 20 parts by mass and more preferably 0.01 to 5 parts by mass per 100 parts by mass of the cyclic organosiloxane or α,ω-dihydroxysiloxane oligomer, α,ω-dialkoxysiloxane oligomer, or alkoxysilane.

By copolymerizing a silane coupling agent with a cyclic organosiloxane or α,ω-dihydroxysiloxane oligomer, α,ω-dialkoxysiloxane oligomer, or alkoxysilane, an organopolysiloxane that has a unit (unit represented by [Si(R²)(Z)O]) having a repeating number of c in the formula (1) above is obtained, and (B) vinyl chloride can be graft-polymerized thereto.

A known polymerization catalyst may be used as the polymerization catalyst. In particular, a strong acid is preferred, and examples thereof include hydrochloric acid, sulfuric acid, dodecylbenzenesulfonic acid, citric acid, lactic acid, and ascorbic acid. Dodecylbenzenesulfonic acid, which has a surfactant function, is preferable.

The amount of the polymerization catalyst used is preferably 0.01 to 10 parts by mass and more preferably 0.2 to 2 parts by mass per 100 parts by mass of the cyclic organosiloxane or α,ω-dihydroxysiloxane oligomer, α,ω-dialkoxysiloxane oligomer, alkoxysilane, or the like.

In addition, as the anionic surfactant, sodium lauryl sulfate, sodium laureth sulfate, N-acylamino acid salts, N-acyl taurine salts, aliphatic soaps, alkyl phosphates, sodium lauroyl methyl taurate, and sodium myristoyl methyl taurate, etc., are preferable. More preferable are N-acyl amino acid salts, N-acyl taurine salts, aliphatic soaps, alkyl phosphates, sodium lauroyl methyl taurate, and sodium myristoyl methyl taurate, and particularly preferable are sodium lauroyl methyl taurate, sodium myristoyl methyl taurate, and sodium lauryl sulfate.

The amount of the anionic surfactant used is preferably 0.1 to 20 parts by mass and more preferably 0.5 to 10 parts by mass per 100 parts by mass of the cyclic organosiloxane or α,ω-dihydroxysiloxane oligomer, α,ω-dialkoxysiloxane oligomer, or alkoxysilane.

The polymerization temperature is preferably 50 to 75°C, and the polymerization time is preferably 10 hours or more and more preferably 15 hours or more. Furthermore, aging at 5 to 30°C for 10 hours or more is preferably performed after polymerization.

After completion of the polymerization reaction, the product may be neutralized to a pH of 2.5 to 14, preferably 4 to 11, using a neutralizing agent (of, for example, a 10% aqueous sodium carbonate solution).

The weight-average molecular weight (Mw) obtained by viscosity measurement of the organopolysiloxane (A) is preferably 10,000 to 1,000,000 and more preferably 100,000 to 500,000 from the viewpoint of exhibiting slidability.

Here, the weight-average molecular weight (Mw) obtained by viscosity measurement of the organopolysiloxane is calculated from the specific viscosity ηsp (25°C) of a toluene solution of organopolysiloxane having a concentration of 1 g/100 ml. $ηsp = \left(η/η0\right) - 1$ (η0: viscosity of toluene, η: viscosity of solution) $ηsp = \left[η\right] + 0.3 {\left[η\right]}^{2}$ $\left[η\right] = 0.215 \times {10}^{- 4} {M}^{0.65}$

Specifically, 20 g of an emulsion of organopolysiloxane is mixed with 20 g of IPA (isopropyl alcohol) to break the emulsion, and then IPA is discarded and the residual rubbery organopolysiloxane is dried overnight at 60°C. The resulting product is prepared into a toluene solution with an organopolysiloxane concentration of 1 g/100 ml, and the toluene solution is measured with a Ubbelohde viscometer at 25°C. The molecular weight can be determined by substituting the viscosity into the aforementioned formula (reference literature: Nakamuta, Journal of the Chemical Society of Japan, 77 858 [1956] and Doklady Akad. Nauk. U.S.S.R. 8965 [1953]).

The vinyl chloride-silicone graft copolymer (copolymer resin) can be obtained by graft polymerization of the organopolysiloxane (A) and the vinyl chloride (B).

The vinyl chloride-silicone graft copolymer (copolymer resin) may be produced by a method involving a step of performing graft polymerization of the organopolysiloxane of the formula (1) (component (A)) and vinyl chloride (component (B)) at a mass ratio (mass ratio of the organopolysiloxane of the formula (1) to the vinyl chloride units) of 5:95 to 95:5, preferably 20:80 to 85:15. When the proportion of the organopolysiloxane component of the formula (1) is less than 5 as described above, the slidability is not exhibited in some cases.

Examples of the radical initiator used in producing the vinyl chloride-silicone graft copolymer (copolymer resin) include persulfates such as potassium persulfate and ammonium persulfate, aqueous hydrogen persulfate, t-butyl hydroperoxide, and hydrogen peroxide. If necessary, redox compounds in combined use with reducing agents such as sodium hydrogen sulfite, Rongalit, L-ascorbic acid, tartaric acid, sugars, and amines may also be employed.

Furthermore, the amount of the radical initiator used is preferably 0.1 to 5% by mass and more preferably 0.5 to 3% by mass of the vinyl chloride (B).

The temperature for polymerizing the component (B) with the component (A) is preferably 25 to 85°C and more preferably 55 to 85°C. Furthermore, the polymerization time is preferably 2 to 20 hours and more preferably 3 to 10 hours.

In order to adjust the molecular weight of the polymer and the polymerization ratio, a chain transfer agent may be added. Examples thereof include halogenated hydrocarbons such as chloroform and carbon tetrachloride; and mercaptans such as n-dodecyl mercaptan, tert-dodecyl mercaptan, and n-octyl mercaptan.

The amount of the chain transfer agent used is preferably 0.1 to 1 part by mass and more preferably 0.3 to 0.8 parts by mass per 100 parts by mass of the monomer (vinyl chloride).

The resultant vinyl chloride-silicone graft copolymer (copolymer resin) is a polymer in which the vinyl chloride of the component (B) is randomly bonded to the organopolysiloxane of the component (A) and in which multiple types of structures are mixed; thus, this product cannot be directly specified by the structure or properties thereof.

A preferred method for producing an emulsion of a vinyl chloride-silicone graft copolymer (copolymer resin) includes a step of performing emulsion polymerization of the organopolysiloxane of the formula (1) (Component (A)) and vinyl chloride (Component (B)) at a mass ratio (mass ratio of the organopolysiloxane of the formula (1) to the vinyl chloride units) of 5:95 to 95:5, preferably 20:80 to 85:15.

For the emulsion polymerization, the organopolysiloxane of the component (A) is used in the emulsion form, and the surfactant contained in the organopolysiloxane emulsion is sufficient to carry out graft polymerization; however, for improved stability, sodium lauryl sulfate, sodium laureth sulfate, N-acyl amino acid salts, N-acyl taurine salts, aliphatic soaps, alkyl phosphates, etc., may be added as an anionic surfactant. In addition, a nonionic emulsifier such as polyoxyethylene lauryl ether or polyoxyethylene tridecyl ether may be added. When the surfactants are added, the amount thereof used is preferably 0.1 to 5% by mass of the vinyl chloride (B).

The resultant vinyl chloride-silicone graft copolymer obtained by emulsion polymerization in this way may also be obtained in the emulsion form, that is, as an emulsion of the vinyl chloride-silicone graft copolymer.

The vinyl chloride-silicone graft copolymer (copolymer resin) preferably has an emulsion solid content of 25 to 40% by mass. The viscosity (25°C) of this emulsion is preferably 1 to 500 mPa·s and more preferably 1 to 200 mPa·s. The viscosity can be measured with a rotational viscometer. The emulsion preferably has an average particle size of 0.1 µm (100 nm) to 0.5 µm (500 nm). The average particle size as used herein refers to a value measured with a dynamic light scattering particle size distribution analyzer.

The blend amount of the vinyl chloride-silicone graft copolymer resin emulsion of the component (II) is 1 to 40% by mass and preferably 5 to 30% by mass in solid content in the coating composition. When the amount of the vinyl chloride-silicone graft copolymer resin emulsion is less than 1% by mass, the wear resistance does not improve at all in some cases, and when the amount exceeds 40% by mass, blushing occurs and wear resistance decreases in some cases.

The coating composition according to the present invention is obtained by mixing an emulsion of the component (I), selected from a vinyl chloride resin emulsion, an acrylic resin emulsion, and a urethane resin emulsion, with a vinyl chloride-silicone graft copolymer resin emulsion of the component (II) in an aqueous system by a known mixing preparation method such as the one using a propeller agitator or a homogenizer.

In addition, to the coating composition according to the present invention, antioxidants, colorants, UV absorbers, light stabilizers, antistatic agents, plasticizers, flame retardants, thickeners, surfactants, organic solvents (film-forming aids, etc.), other resins, etc., may be added as long as the properties remain unaffected.

A laminate can be obtained by applying the coating composition according to the present invention to one surface or both surfaces of a substrate by coating or dipping.

From the viewpoint of securely obtaining the desired high transparency, the rate of increase in haze when the coating composition according to the present invention is applied to a substrate with respect to the haze value of the substrate before the application is preferably 1500% or less and more preferably 1000% or less although this depends on the type of the substrate. The term "haze" as used herein refers to a haze calculated in accordance with the provisions of JIS K 7136 (2000) from the total luminous transmittance and the diffuse transmittance using the following equation: 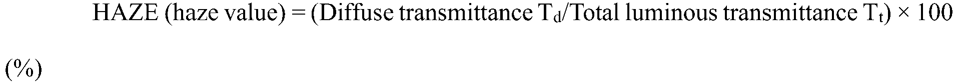 HAZE (haze value) = (Diffuse transmittance Td/Total luminous transmittance T1) × 100 (%)

The haze value of the coated substrate can be measured by, for example, using a haze meter available from NIPPON DENSHOKU INDUSTRIES Co., Ltd. The haze value of the substrate before application of the coating composition can also be measured in accordance with the same standard. The term "rate of increase in haze" as used herein refers to the one which may be calculated from the following equation in which the haze value of the substrate is represented by H_{X} and the haze value after application of the coating composition is represented by H_{Y}. $\left[Rate of increase in haze value \left(%\right)\right] = \left[\left({H}_{Y}-{H}_{X}\right)/{H}_{X}\right] \times 100$

When the coating composition according to the present invention is applied to one surface or both surfaces of a substrate, such as substrates made of plastics (PET, PI, or the like), glass (common glass, SiO₂, or the like), metal (Si, Cu, Fe, Ni, Co, Au, Ag, Ti, Al, Zn, Sn, Zr, alloys thereof, or the like), wood, fibers (cloths, threads, or the like), paper, and ceramics (fired products of oxides, carbides, nitrides, or the like), by coating or dipping and dried (room temperature to 150°C), the advantages of the silicone resin, such as water repellency, weather resistance, heat resistance, cold resistance, gas permeability, and slidability, can be imparted over a long period of time while maintaining the advantages of the acrylic resin, the vinyl chloride resin, or the urethane resin.

In this description, room temperature refers to 1°C to 40°C.

Examples of the plastic substrate as used herein include poly(meth)acrylic acid esters such as polymethyl methacrylate, polycarbonate, polystyrene, polyethylene terephthalate, polyvinyl chloride, polyester, cellulose, diethylene glycol bisallyl carbonate polymers, acrylonitrile-butadiene-styrene polymers, polyurethane, and epoxy resins. Examples of the plastic processed product include automotive interior materials, organic glass, electrical materials, building materials, building exterior materials, optical films for use in liquid crystal displays etc., light scattering films, cellular phones, and home electric appliances. An example of the drying method is a method that involves leaving the composition to stand at room temperature for 1 to 10 days; however, from the viewpoint of accelerating curing, a method that involves performing heating at a temperature of 20 to 150°C for 1 second to 10 hours is preferable. Furthermore, when the plastic substrate is made of a material prone to deformation or discoloration due to heating, drying is preferably performed at a relatively low temperature of 20 to 100°C.

Soda-lime glass, quartz glass, lead glass, borosilicate glass, alkali-free glass, and the like may be used as the glass substrate. Examples of the glass processed product include architectural flat glass, glass for vehicles such as automobiles, lens glass, mirror glass, display panel glass, and solar cell module glass. A preferable drying method involves leaving the substrate to stand at room temperature for 1 to 10 days or heating the substrate at a temperature of 20 to 150°C, in particular, 60 to 150°C, for 1 second to 10 hours.

Examples of the wood used as the wood substrate include wood of Maple family, Betulaceae family, Lauraceae family, Chestnut family, Scrophulariaceae family, Araucariaceae family, Ulmaceae family, Bignoniaceae family, Rosaceae family, Cupressaceae family, Dipterocarpaceae family, Myrtaceae family, Fagaceae family, Pinaceae family, Fabaceae family, and Oleaceae family. The wood processed product may be selected from a processed or shaped article directly made of wood, plywood, laminated wood, a processed or shaped article of plywood or laminated wood, and any combination of the foregoing, including, for example, building materials for residential construction including building exterior and interior materials, furniture such as desks, wood toys, and musical instruments. A method that involves hot-air drying at 20 to 150 °C, in particular, 50 to 150°C, for 0.5 to 5 hours is preferable. Furthermore, discoloration of the coating film can be avoided by setting the drying temperature to 120°C or lower.

Examples of the fiber substrate include those of natural fibers such as cotton, hemp, linen, wool, silk, cashmere, and asbestos and chemical fibers such as polyamide, polyester, viscose, cellulose, glass, and carbon. Examples of the fiber processed product include all types of woven fabrics, knitted fabrics, nonwoven fabrics, or films, and paper. The drying method is preferably a method that involves leaving the composition to stand at room temperature for 10 minutes to several tens of hours, or at 20 to 150°C for 0.5 minutes to 5 hours.

The viscosity (23°C) of the final product composition is preferably 10 mPa·s or more and 3,000 mPa·s or less and more preferably 20 mPa·s or more and 2,500 mPa·s or less. This viscosity is a value measured with a B-type viscometer (23 ± 0.5°C).

Moreover, this composition can be effectively utilized at a pH of 2 to 12 in both alkaline and acidic environments by blending a base or an acidic compound.

The substrate coating method is not particularly limited, and examples thereof include direct dipping, spray coating, bar coating, and roll coating; meanwhile, the film thickness after drying-up is preferably about 0.5 to 50 µm, and more preferably 1 to 20 µm in view of transparency. Furthermore, when a film is formed by dipping, the substrate is dipped for 10 seconds to 30 minutes and dried at room temperature to 150°C for about 1 second to 10 days while making adjustment as appropriate so as to achieve a desired thickness of, preferably, 0.01 to 5 kg/m².

When a film is formed by application, the application amount of the coating composition according to the present invention to the substrate is not particularly limited, but, usually, in view of the antifouling properties, workability, etc., the film is formed in an application amount in the range of 1 to 300 g/m² and more preferably 5 to 100g/m² in terms of solid content or formed into a thickness of 1 to 500 µm and preferably 5 to 100 µm, and then naturally dried or dried under heating at 100 to 200°C.

The water contact angle of the obtained film is preferably 50° or more as measured in an atmosphere of a temperature of 23°C and a humidity of 45% with an automatic contact angle meter of type CA-V (available from Kyowa Interface Science Co., Ltd.) by bringing a 1.8 µL droplet of ion-exchanged water into contact with the film and measuring the contact angle 30 seconds after the contact.

### Examples

Production examples, working examples, and comparative examples will now be described to specifically describe the present invention; however, the present invention is not limited to the following production examples and working examples. Furthermore, the molecular weights described below are weight-average molecular weights (Mw), determined by viscosity measurement, calculated from the specific viscosity of a toluene solution of organopolysiloxane having a concentration of 1 g/100 ml. In the examples below, parts and % respectively indicate parts by mass and % by mass.

### [Production example 1]

Into a 4 L polyethylene beaker, a solution prepared by dissolving 1200 g of octamethylcyclotetrasiloxane, 4.8 g of γ-methacryloxypropylmethyldimethoxysilane, and 12 g of sodium lauryl sulfate in 108 g of pure water, and a solution prepared by dissolving 12 g of dodecylbenzenesulfonic acid in 108 g of pure water were charged, and then the resulting mixture was emulsified to homogeneity with a homomixer, and the resulting emulsion was diluted by gradually adding 728 g of water and passed through a high-pressure homogenizer twice at a pressure of 300 kgf/cm² so as to obtain a homogeneous white emulsion. This emulsion was transferred to a 2 L glass flask equipped with a stirrer, a thermometer, and a reflux condenser, followed by performing polymerization reaction at 55°C for 24 hours, and the resulting product was aged at 15°C for 24 hours and then neutralized with a 10% aqueous sodium carbonate solution to a pH of 7. According to this emulsion, the non-volatile content (solid content) after drying at 105°C for 3 hours was 44%, and the organopolysiloxane in the emulsion had a non-flowing soft gel form. The emulsion (silicone composition) had a structure represented by the following formula (A) with a molecular weight of about 250,000 as estimated from the viscosity of the toluene solution. In the formula (A), R² is a γ-methacryloxypropyl group. The structure of the organopolysiloxane obtained by the aforementioned polymerization reaction was confirmed by ¹H-NMR (frequency: 600 MHz, room temperature, accumulation number of 128 repeats) and ²⁹Si-NMR (frequency: 60 MHz, room temperature, accumulation number of 5000 repeats) (instrument name: JNM-ECA600, measurement solvent: CDCl₃).

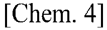

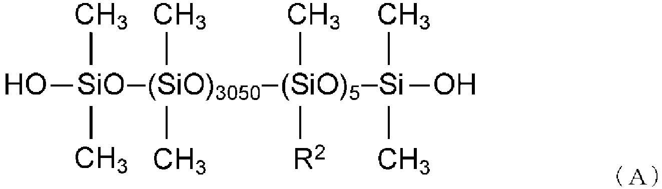

Into a polymerization vessel equipped with a stirrer, a condenser, a thermometer, and a nitrogen gas inlet port, 1207 g of the aforementioned emulsion was transferred, 59 g of vinyl chloride and ammonium persulfate were added thereto, and reaction was carried out at 60°C for 8 hours to graft-copolymerize vinyl chloride to the silicone composition to thereby obtain an emulsion of a vinyl chloride-silicone graft copolymer having a non-volatile content of 30%. The obtained vinyl chloride-silicone graft copolymer was a vinyl chloride-silicone graft copolymer in which vinyl chloride was grafted to R² in the formula (A).

### [Production example 2]

An emulsion of a vinyl chloride-silicone graft copolymer having a non-volatile content of 30% was obtained by the same method except that the amount of vinyl chloride in Production example 1 was changed to 132 g.

### [Production example 3]

An emulsion of a silicone-vinyl chloride graft copolymer having a non-volatile content of 30% was obtained by the same method except that the amount of vinyl chloride in Production example 1 was changed to 226 g.

### [Production example 4]

Into a 4 L polyethylene beaker, a solution prepared by dissolving 1200 g of octamethylcyclotetrasiloxane, 0.96 g of γ-methacryloxypropylmethyldimethoxysilane, and 12 g of sodium lauryl sulfate in 108 g of pure water, and a solution prepared by dissolving 12 g of dodecylbenzenesulfonic acid in 108 g of pure water were charged, and then the resulting mixture was emulsified to homogeneity with a homomixer, and the resulting emulsion was diluted by gradually adding 728 g of water and passed through a high-pressure homogenizer twice at a pressure of 300 kgf/cm² so as to obtain a homogeneous white emulsion. This emulsion was transferred to a 2 L glass flask equipped with a stirrer, a thermometer, and a reflux condenser, followed by performing polymerization reaction at 55°C for 24 hours, and the resulting product was aged at 15°C for 24 hours and then neutralized with a 10% aqueous sodium carbonate solution to a pH of 7. According to this emulsion, the non-volatile content (solid content) after drying at 105°C for 3 hours was 45%, and the organopolysiloxane in the emulsion had a non-flowing soft gel form. The emulsion (silicone composition) had a structure represented by the following formula (B) with a molecular weight of about 250,000 as estimated from the viscosity of the toluene solution. In the formula (B), R² is a γ-methacryloxypropyl group.

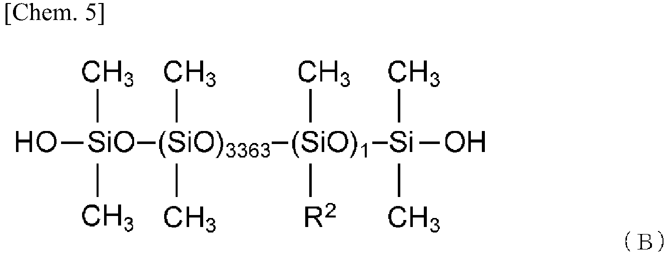

Into a polymerization vessel equipped with a stirrer, a condenser, a thermometer, and a nitrogen gas inlet port, 1198 g of the aforementioned emulsion was transferred, and 231 g of vinyl chloride and ammonium persulfate were added thereto, and reaction was carried out at 60°C for 8 hours to graft-copolymerize vinyl chloride to the silicone composition to thereby obtain an emulsion of a vinyl chloride-silicone graft copolymer having a non-volatile content of 30%. The obtained vinyl chloride-silicone graft copolymer was a vinyl chloride-silicone graft copolymer in which vinyl chloride was grafted to R² in the formula (B).

### [Production example 5]

An emulsion of a vinyl chloride-silicone graft copolymer having a non-volatile content of 30% was obtained by the same method except that the amount of vinyl chloride in Production example 1 was changed to 528 g.

### [Production example 6]

An emulsion of a vinyl chloride-silicone graft copolymer having a non-volatile content of 30% was obtained by the same method except that the amount of vinyl chloride in Production example 1 was changed to 1232 g.

### [Comparative production example 1]

Into a 4 L polyethylene beaker, a solution prepared by dissolving 1200 g of octamethylcyclotetrasiloxane, 4.8 g of γ-methacryloxypropylmethyldimethoxysilane, and 12 g of sodium lauryl sulfate in 108 g of pure water, and a solution prepared by dissolving 12 g of dodecylbenzenesulfonic acid in 108 g of pure water were charged, and then the resulting mixture was emulsified to homogeneity with a homomixer, and the resulting emulsion was diluted by gradually adding 728 g of water and passed through a high-pressure homogenizer twice at a pressure of 300 kgf/cm² so as to obtain a homogeneous white emulsion. This emulsion was transferred to a 2 L glass flask equipped with a stirrer, a thermometer, and a reflux condenser, followed by performing polymerization reaction at 55°C for 24 hours, and the resulting product was aged at 15°C for 24 hours and then neutralized with a 10% aqueous sodium carbonate solution to a pH of 7. According to this emulsion, the non-volatile content (solid content) after drying at 105°C for 3 hours was 44%, and the organopolysiloxane in the emulsion had a non-flowing soft gel form. The emulsion (silicone composition) had a structure represented by the formula (A) above with a molecular weight of about 250,000 as estimated from the viscosity of the toluene solution.

### [Comparative production example 2]

To a polymerization vessel equipped with a stirrer, a condenser, a thermometer, and a nitrogen gas inlet port, 840 g of vinyl chloride, 16.8 g of 2-hydroxyethyl methacrylate, and potassium peroxodisulfate were added, reaction was carried out for 30 hours while adding 2530 g of vinyl chloride at 45°C, and an emulsion of a copolymer having a non-volatile content of 40% was obtained as a result.

### [Comparative production example 3]

Into a 2 L polyethylene beaker, a solution prepared by dissolving 1200 g of octamethylcyclotetrasiloxane, 0.96 g of γ-methacryloxypropylmethyldimethoxysilane, and 12 g of sodium lauryl sulfate in 108 g of pure water, and a solution prepared by dissolving 12 g of dodecylbenzenesulfonic acid in 108 g of pure water were charged, and then the resulting mixture was emulsified to homogeneity with a homomixer, and the resulting emulsion was diluted by gradually adding 400 g of water and passed through a high-pressure homogenizer twice at a pressure of 300 kgf/cm² so as to obtain a homogeneous white emulsion. This emulsion was transferred to a 2 L glass flask equipped with a stirrer, a thermometer, and a reflux condenser, followed by performing polymerization reaction at 55°C for 24 hours, and the resulting product was aged at 15°C for 24 hours and then neutralized with a 10% aqueous sodium carbonate solution to a pH of 7. According to this emulsion, the non-volatile content after drying at 105°C for 3 hours was 45%, and the organopolysiloxane in the emulsion had a non-flowing soft gel form. The emulsion (silicone composition) had a structure represented by the formula (B) with a molecular weight of about 250,000 as estimated from the viscosity of the toluene solution.

To this emulsion, while 231.4 g of methyl methacrylate was added dropwise over a period of 3 to 5 hours, reaction was carried out at 27°C by using t-butyl hydroperoxide to graft-copolymerize acrylic to the silicone composition described above, as a result of which an emulsion of an acrylic·silicone graft copolymer having a non-volatile content of 44.4% was obtained.

### [Comparative production example 4]

160 g of the silicone emulsion obtained in the Comparative production example 1 described above and 75 g of the vinyl chloride emulsion obtained in the Comparative production example 2 described above were mixed and stirred for 1 hour, as a result of which a mixed emulsion having a non-volatile content of 42.7% was obtained.

The emulsions obtained in the Production examples 1 to 6 and Comparative production examples 1 to 4 described above were evaluated by the following methods. The results are indicated in Tables 1 and 2.

### <Solid content measurement method>

About 1 g of a sample was accurately weighed into an aluminum foil dish, placed in a dryer kept at about 105°C, heated for 1 hour, removed from the dryer, and placed in a desiccator to cool, and then the aluminum foil dish with the dried sample therein was weighed, and the solid content (evaporation residue) was calculated using the following formula: [Math. 1] $R = \frac{T - L}{W - L} \times 100$
R: Solid content (evaporation residue) (%)
W: Mass (g) of the aluminum foil dish with the sample therein before drying
L: Mass (g) of the aluminum foil dish
T: Mass (g) of the aluminum foil dish with the sample therein after drying
Dimension of aluminum foil dish: 65 φ × 23 h (mm)

### <Viscosity measurement method>

The liquid temperature of a sample was held at 23 ± 0.5°C, and a rotational viscometer (No. 1 rotor, 6 rpm, available from Toki Sangyo Co., Ltd., trade name: VISCOMETER TVB-10) was used for the measurement.

### <Average particle size>

The average particle size was measured by weighing 0.01 g of a sample, and measuring the average particle size (the value of the particle size corresponding to 50% of the particle size cumulative distribution) with a laser diffraction particle size distribution analyzer (available from Horiba, Ltd., trade name: LA-950V2) under the conditions of circulation flow rate 2 and stirring rate 2.

### [Measurement conditions]

Measurement temperature: 25 ± 1°C
Solvent: ion-exchanged water

### <Measurement of minimum film-forming temperature (MFT)>

The minimum film-forming temperature (MFT, °C) of the emulsion was measured by a method conforming to JIS K-6828-2. Specifically, a simplified film-forming temperature meter (available from Imoto machinery Co., LTD.) in which a heating source and a cooling source were installed with a particular distance from each other was used. To an aluminum foil, 1 µl of the emulsion was applied, and the state of the coating film after 2 hours was observed using the aforementioned instrument. The emulsion was dried with a temperature gradient, and the temperature at the border between a portion that became transparent by film formation and a portion that did not form a film was measured, and this result was assumed to be the minimum film-forming temperature (MFT, °C). Considering the drying property during the coating film formation, the MFT is preferably 100°C or less.

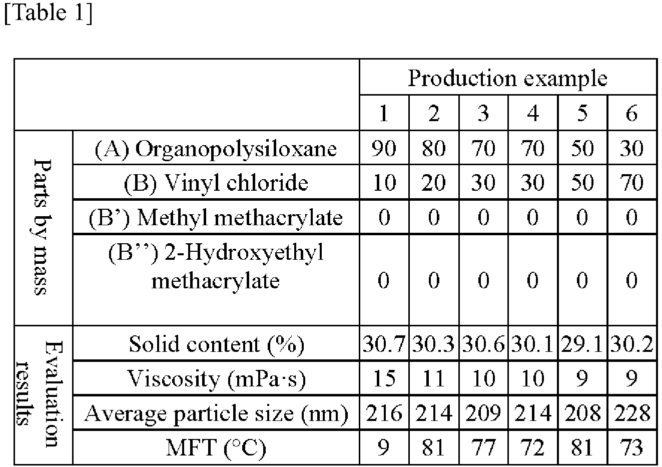

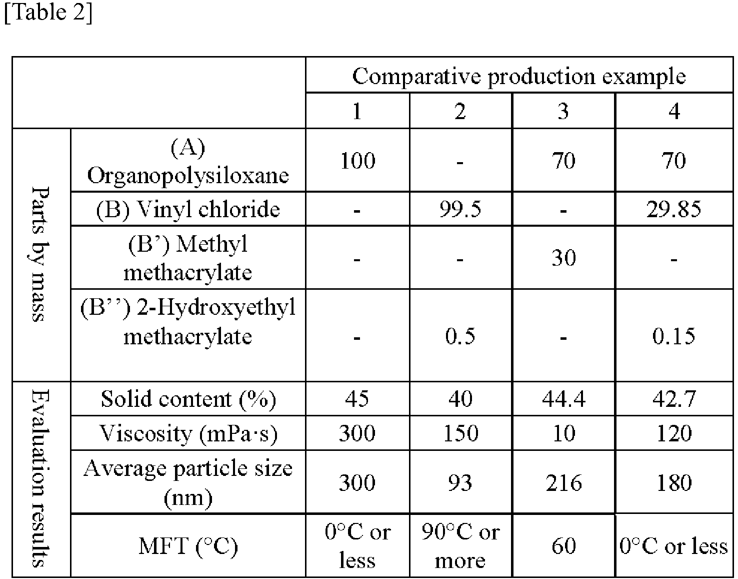

### [Working Example 1]

Hydran WLS-213 (polycarbonate-based water-based urethane resin available from DIC Corporation) was used as the urethane resin emulsion (I), and while this resin emulsion was being stirred, the vinyl chloride-silicone copolymer resin emulsion obtained in Production example 1 was added, followed by stirring for 10 minutes or more, and then the resulting mixture was filtered with an 80-mesh filter to obtain a coating composition of Working Example 1.

### [Working Examples 2 to 9 and Comparative Examples 1 to 7]

Coating compositions of the respective examples were produced as in Working Example 1 according to the blend ratios of the components indicated in Table 3 (Working Examples 1 to 6), Table 4 (Working Examples 7 to 9), Table 5 (Comparative Examples 1 to 5), and Table 6 (Comparative Examples 6 and 7). Note that the raw material ratios indicated in Tables 3, 4, 5, and 6 are mass ratios of solid components.

### [Working Example 10]

VINYBLAN 700 (available from Nissin Chemical Industry Co., Ltd.) was used as the acryl·vinyl chloride emulsion (I), and while this resin emulsion was being stirred, the vinyl chloride-silicone copolymer resin emulsion obtained in Production example 3 was added, followed by stirring for 10 minutes or more, and then the resulting mixture was filtered with an 80-mesh filter to obtain a coating composition of Working Example 10 (Table 4).

### [Working Example 11 and Comparative Example 8]

Coating compositions of the respective examples were produced as in Working Example 10 according to the blend ratios of the components indicated in Table 4 (Working Example 11) and Table 6 (Comparative Example 8).

The "Haze value/haze value-rate of increase in haze" and "Static and kinetic coefficients of friction" of the obtained coating compositions of the working examples and the comparative examples were measured. The numerical values thereof are indicated in Tables 3 to 6. The measurements were carried out as follows.

### <Film forming method>

A coating film was formed on a PET film substrate and a soft vinyl chloride sheet substrate by applying the coating composition of each example using a bar coater and drying the coating composition at 105°C for 3 minutes so that the dried coating film had a thickness of about 10 µm.

### <Alcohol resistance>

The coating composition of each of the Working Examples and Comparative Examples was applied to a PET film using a bar coater and dried at 105°C for 3 minutes so that a coating film having a thickness of about 10 µm after drying was formed.

Onto the coating film, a droplet of 98% ethanol was deposited, and the coating film was air-dried at normal temperature overnight. The change in the coating film after air drying was evaluated through visual observation.
∘: No change in appearance occurred.
Δ: Marks were found but no blushing occurred.
×: Blushing occurred.

### <Water contact angle>

The coating composition of each of the Working Examples and Comparative Examples was applied to a PET film using a bar coater and dried at 105°C for 3 minutes so that a coating film having a thickness of about 10 µm after drying was formed.

Onto the coating film, a 2 µl droplet of pure water was deposited, and the contact angle was measured after 1 second and then after 30 seconds using a contact angle meter of type CAD available from Kyowa Interface Science. The contact angle is preferably 80° (degrees) or more in view of preventing adhesion of water-based stains by water repellency.

### <Measurement of haze value>

The coating composition of each of the Working Examples and Comparative Examples was applied to a PET film (haze value: 2.20) using a bar coater and dried at 105°C for 3 minutes so that the dried coating film had a thickness of about 10 µm.

The haze value of the substrate having the coating film of the coating composition of each of the examples described above was measured with "Haze Meter COH400" (trade name, available from NIPPON DENSHOKU INDUSTRIES Co., Ltd.).

### <Measurement of Static and kinetic coefficients of friction>

The coating composition of each of the Working Examples and Comparative Examples was applied to a PET film using a bar coater and dried at 105°C for 3 minutes so that a coating film having a thickness of about 10 µm after drying was formed.

A 200 g metal indenter was brought into contact with the coating film vertically by using HEIDON TYPE-38 (SHINTO Scientific Co., Ltd.) and moved at 3 cm/minute during which the friction force was measured; and then the coefficient of friction was calculated from the friction force. Note that the preferable range of the static and kinetic coefficients of friction under the aforementioned conditions is 0.2 or less for the static coefficient of friction, and 0.1 or less for the kinetic coefficient of friction.

### <Wear resistance>

A cotton canvas was rubbed with a coating film formed on a soft vinyl chloride synthetic leather sheet, and the extent of breaking of the coating film was confirmed (visually) from the color transfer. The friction conditions involved 2000 friction cycles at 9.8 N.
⊚: Excellent
∘: Good
Δ: Fair
×: Fail

**[Table 3]**

| | | Working example | | | | | |
|---|---|---|---|---|---|---|---|
| | | 1 | 2 | 3 | 4 | 5 | 6 |
| (I) | WLS-213 | 90 | 90 | 90 | 90 | 90 | 90 |
| (II) | Production example 1 | 10 | | | | | |
| | Production example 2 | | 10 | | | | |
| | Production example 3 | | | 10 | | | |
| | Production example 4 | | | | 10 | | |
| | Production example 5 | | | | | 10 | |
| | Production example 6 | | | | | | 10 |
| Solvent resistance | Alcohol resistance | Δ | ○ | ○ | ○ | ○ | ○ |
| Water repellency | Water contact angle (1 s after droplet deposition, ° 10 µm thickness) | 84.4 | 83.5 | 80.6 | 82.3 | 81.2 | 81.2 |
| | Water contact angle (30 s after droplet deposition, ° 10 µm thickness) | 83.1 | 81.9 | 79.2 | 81.0 | 80.2 | 80.5 |
| Transparency | Haze value (10 µm thickness) | 6.69 | 4.99 | 5.14 | 5.24 | 3.52 | 3.16 |
| Slidability | Static coefficient of friction µs (200 g load, 10 µm thickness) | 0.092 | 0.136 | 0.139 | 0.085 | 0.242 | 0.284 |
| | Kinetic coefficient of friction µk (200 g load, 10 µm thickness) | 0.026 | 0.037 | 0.029 | 0.038 | 0.096 | 0.151 |
| Wear resistance | Wear resistance | Δ | ○ | ○ | ○ | Δ | Δ |

**[Table 4]**

| | | Working example | | | | |
|---|---|---|---|---|---|---|
| | | 7 | 8 | 9 | 10 | 11 |
| (I) | WLS-213 | 50 | 30 | 1 | | |
| | VINYBLAN 700 | | | | 50 | 30 |
| (II) | Production example 3 | 50 | 70 | 99 | 50 | 70 |
| Solvent resistance | Alcohol resistance | ○ | Δ | Δ | Δ | Δ |
| Water repellency | Water contact angle (1 s after droplet deposition, ° 10 µm thickness) | 90.3 | 107.2 | 107.7 | 106.2 | 109.7 |
| | Water contact angle (30 s after droplet deposition, ° 10 µm thickness) | 88.9 | 100.5 | 103.6 | 103.7 | 105.9 |
| Transparency | Haze value (10 µm thickness) | 3.71 | 3.11 | 3.1 | 9.44 | 6.32 |
| Slidability | Static coefficient of friction µs (200 g load, 10 µm thickness) | 0.094 | 0.016 | 0.014 | 0.057 | 0.023 |
| | Kinetic coefficient of friction µk (200 g load, 10 µm thickness) | 0.005 | 0.005 | 0.003 | 0.028 | 0.015 |
| Wear resistance | Wear resistance | ○ | ○ | ⊚ | ○ | ⊚ |

**[Table 5]**

| | | Comparative example | | | | |
|---|---|---|---|---|---|---|
| | | 1 | 2 | 3 | 4 | 5 |
| (I) | WLS-213 | 100 | 90 | 90 | 90 | 90 |
| (II) | Comparative production example 1 | | 10 | | | |
| | Comparative production example 2 | | | 10 | | |
| | Comparative production example 3 | | | | 10 | |
| | Comparative production example 4 | | | | | 10 |
| Solvent resistance | Alcohol resistance | ○ | ○ | ○ | - | ○ |
| Water repellency | Water contact angle (1 s after droplet deposition, ° 10 µm thickness) | 71.1 | 89.9 | 79.3 | 71.2 | 91.2 |
| | Water contact angle (30 s after droplet deposition, ° 10 µm thickness) | 69.7 | 82.3 | 77.2 | 70.1 | 83.6 |
| Transparency | Haze value (10 µm thickness) | 1.97 | 13.44 | 9.23 | 3.1 | 14.21 |
| Slidability | Static coefficient of friction µs (200 g load, 10 µm thickness) | 0.720 | 0.053 | 0.265 | 0.337 | 0.042 |
| | Kinetic coefficient of friction µk (200 g load, 10 µm thickness) | 0.478 | 0.021 | 0.037 | 0.265 | 0.024 |
| Wear resistance | Wear resistance | × | ○ | Δ | × | ○ |

**[Table 6]**

| | | Comparative example | | |
|---|---|---|---|---|
| | | 6 | 7 | 8 |
| (I) | WLS-213 | 99.95 | 99.9 | |
| | VINYBLAN 700 | | | 100 |
| (II) | Production example 3 | 0.05 | 0.1 | |
| Solvent resistance | Alcohol resistance | ○ | ○ | Δ |
| Water repellency | Water contact angle (1 s after droplet deposition, ° 10 µm thickness) | 70.6 | 73.9 | 75.7 |
| | Water contact angle (30 s after droplet deposition, ° 10 µm thickness) | 70.1 | 72.3 | 68.3 |
| Transparency | Haze value (10 µm thickness) | 2.55 | 2.58 | 5.88 |
| Slidability | Static coefficient of friction µs (200 g load, 10 µm thickness) | 0.561 | 0.329 | 0.313 |
| | Kinetic coefficient of friction µk (200 g load, 10 µm thickness) | 0.356 | 0.251 | 0.174 |
| Wear resistance | Wear resistance | × | × | × |

## Claims

1. A coating composition comprising the components (I) and (II) of:
(I) at least one emulsion selected from a vinyl chloride resin emulsion, an acrylic resin emulsion, and a urethane resin emulsion in an amount of 60 to 99% by mass in solid content; and
(II) a vinyl chloride-silicone graft copolymer resin emulsion in an amount of 1 to 40% by mass in solid content, the vinyl chloride-silicone graft copolymer resin emulsion being a graft copolymer of (A) an organopolysiloxane represented by the following formula (1) and (B) vinyl chloride, wherein a mass ratio of the organopolysiloxane (A) to the vinyl chloride (B) is (A):(B) = 5:95 to 95:5: 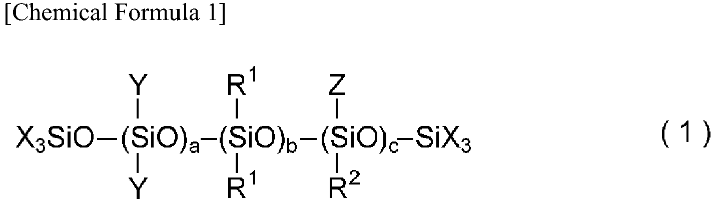 wherein, in the formula (1), each R¹ is the same or a different substituted or unsubstituted monovalent hydrocarbon group having 1 to 20 carbon atoms, R² is a radically reactive functional group, each X is the same or a different substituted or unsubstituted monovalent hydrocarbon group having 1 to 20 carbon atoms or an alkoxy group having 1 to 20 carbon atoms, or a hydroxyl group, each Y is the same or a different group represented by X or -[O-Si(X)₂]_{d}-X, Z is an alkyl group having 1 to 4 carbon atoms, an alkoxy group having 1 to 4 carbon atoms, or a hydroxyl group, a is a number of 0 to 10,000, b is a number of 100 to 10,000, c is a number of 0.0001 to 100, and d is a number of 1 to 1,000.

2. A cured product of the coating composition according to claim 1.

3. The cured product according to claim 2, wherein the cured product is a coating film.

4. A laminate comprising the cured product according to claim 2.

5. A laminate comprising the cured product according to claim 3.
